# EUROPEAN PATENT SPECIFICATION

(11) **EP 4 056 160 B1**
(45) Date of publication and mention of the grant of the patent: **16.10.2024**
(21) Application number: 21162304.6
(22) Date of filing: 12.03.2021
(51) Int. Cl.: A61G 7/00, A61G 7/10

(54) **DEVICE FOR TURNING PERSONS LYING ON A BED SHEET**
VORRICHTUNG ZUM WENDEN VON AUF EINEM BETTLAKEN LIEGENDEN PERSONEN
DISPOSITIF POUR RETOURNER DES PERSONNES ALLONGÉES SUR LE DRAP D'UN LIT

(43) Date of publication of application: 14.09.2022
(73) Proprietor: CPWH Intellectual Property B.V., 3891 KC Zeewolde (NL)
(72) Inventor: Middelkoop, Maarten, 7004 AZ Doetinchem (NL)
(74) Representative: 't Jong, Bastiaan Jacob

(56) References cited:
- EP-A2- 0 875 228
- US-A- 4 726 082
- US-A- 4 776 047

## Description

The invention relates to a device for turning persons lying on a bed sheet comprising:
- a frame, such as a bed frame, having a substantially horizontal elongate support surface for supporting a lying person;
- a first and a second tube respectively arranged adjacent and on either longitudinal side of the support surface, wherein the first and second tube are substantially parallel to each other;
- a bed sheet mounted with one edge to the first tube and mounted with an opposite edge to the second tube, wherein the bed sheet runs over the support surface;
- a first and second motor for driving the first and second tube respectively.

Such a device is known from EP 1505935. By rotating the tubes with the respective motors, the bed sheet is pulled over the support surface. If a person is lying on the bed sheet, the person will also be pulled to a side of the bed, such that the person can roll over towards the middle of the bed. Other examples of known devices for turning persons lying on a bed sheet are disclosed in US4776047A, EP0875228A2 and US4726082A.

By having the tubes at a certain height above the support surface, the bed sheet with the person lying thereon can be pulled upward from the support surface to assist the person in rolling over.

In order to be able to turn the person in both directions, the tubes can also be driven in both directions. However, this provides the possibility for the bed sheet to be rolled up on the tubes in two directions: One direction in which the bed sheet runs from the support surface over the tube and is then rolled on the tube, and the other direction in which the bed sheet runs from the support surface under the tube and is then rolled on the tube. In this latter direction, objects or limbs could get stuck between the bed sheet and the tube as the bed sheet runs first underneath the tube, before it is rolled on the tube. At this nip objects or limbs could be sandwiched.

Another disadvantage of the device according to the prior art, is that the rolling up and rolling off of the bed sheet takes a substantial time. This is because a person lying on the bed sheet, needs to be turned slowly and gently. However, if the bed sheets needs to be exchanged the rolling off and rolling up may be quicker. This would require motors, which would be able to turn at least two different speeds and would increase costs.

It is object of the invention to reduce or even remove the above mentioned disadvantages.

This object is achieved according to the invention with a device according to the preamble, which is characterized by a first and second freewheel clutch arranged respectively between the first tube and first motor and between the second tube and the second motor.

The freewheel clutches ensure that the tubes can only be driven in one direction. This ensures that the bed sheet will always be rolled on the tube in the correct way, wherein the bed sheet runs from the support surface over the tube and then is rolled onto the tube.

The freewheel clutches also allow for the rolling up of the bed sheet to be expedited by hand, although the rolling off of the bed sheet from the tube still needs to be done by driving the tubes. This at least partially expedites the exchange of a bed sheet.

In a preferred embodiment of the device according to the invention the engagement direction of the first freewheel clutch and the engagement direction of the second freewheel clutch are opposite in view of the longitudinal direction of the elongate support surface.

With the first and second freewheel clutches having opposite engagement directions, it is ensured that the bed sheet is rolled onto both tubes in the same way.

In a further preferred embodiment of the device according to the invention in view of the longitudinal direction of the elongate support surface, the first tube is arranged on the left side of the support surface and wherein the first freewheel clutch has a counterclockwise engagement direction, while the second tube is arranged on the right side of the support surface and wherein the second freewheel clutch has a clockwise engagement direction.

In this embodiment the bed sheet will run from the support surface, first over both tubes and is then rolled up on the tubes. This ensures that no objects or limbs can be sandwiched in the nip of a tube and the bed sheet.

In another embodiment of the device according to the invention the first and second freewheel clutch each comprise:
- an input shaft and an output shaft;
- an internal gear concentrically arranged to the output shaft;
- at least one pawl having a rotation axis, which at least one pawl is arranged with the rotation axis eccentrically on the input shaft and wherein the free end of the at least one pawl is urged in engaging contact with the internal gear by spring means.

The internal gear and at least one pawl provide for a shape defined coupling of the clutch in the engagement direction. As a result a high force can be exerted onto the bed sheet for pulling a person over the support surface.

These and other features of the invention will be elucidated in conjunction with the accompanying drawings.
Figure 1 shows a side view of a device according to the invention arranged on a medical bed.
Figure 2 shows a detail of the device of figure 1.
Figure 3 shows a detailed view of the freewheel clutch of the device of figure 1.
Figures 4 - 6 show different states of the freewheel clutch in combination with a bed sheet.

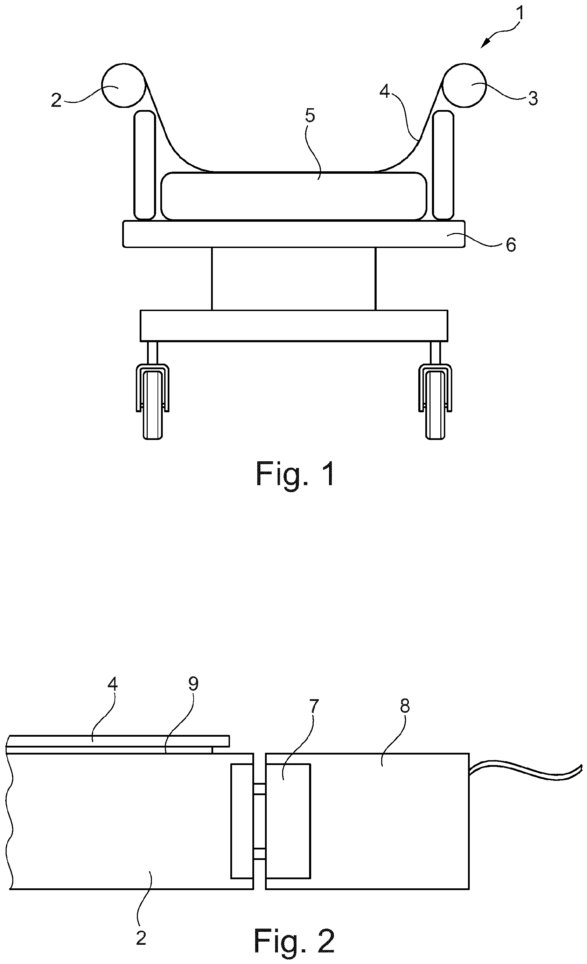

Figure 1 shows an embodiment of a device 1 according to the invention. The device 1 has a first tube 2 and a second tube 3 to which a bed sheet 4 is mounted. The bed sheet 4 lies on a support surface 5, which is formed by the mattress of a medical bed 6.

The first and second tubes 2, 3 are arranged on the longitudinal sides of the mattress 5 and can pull the bed sheet 4 in both directions over the mattress 5 to assist in turning a person lying on the mattress 5.

To this end, the tubes 2, 3 are coupled via a freewheel coupling 7 to a motor 8, as shown in figure 2. The bed sheet 4 is attached to the tube 2 by a velcro strip 9.

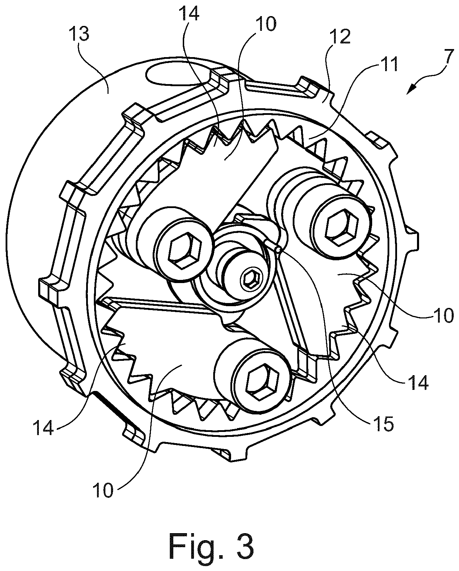

Figure 3 shows the freewheel coupling 7 in more detail. The coupling 7 has an input shaft 13 for connection with the motor 8. Three pawls 10 are hinged to the input shaft 13. The coupling 7 has furthermore an internal gear 11, which is coupled to an output shaft 12 for coupling with one of the tubes 2, 3.

The pawls 10 are provided with some teeth 14, which engage with the internal gear 11. The pawls 10 are urged outwardly against the internal gear 11 by a coil spring 15.

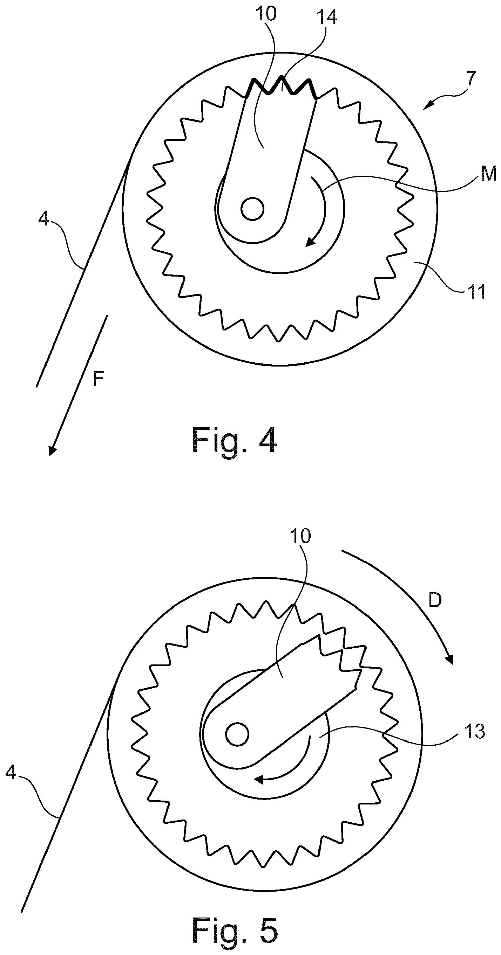

Figure 4 shows the freewheel coupling 7 in a more schematic way with a single pawl 10. The bed sheet 4 is coupled to the internal gear 11 via the tube and output shaft 12. The pawl 10 is driven with a torque M. The pawl 10 engages with its teeth 14 to the internal gear 11 such that a force F is exerted onto the bed sheet 4.

Figure 5 shows the freewheel coupling 7 in which the input shaft 13 with the pawl 10 is stationary. When the tube with the bed sheet 4 is rotated by hand in the direction D, the pawl 10 will be forced out of engagement with the internal gear 11, such that the tube with the bed sheet 4 can freely rotate in the direction in which the bed sheet 4 is rolled onto the tube.

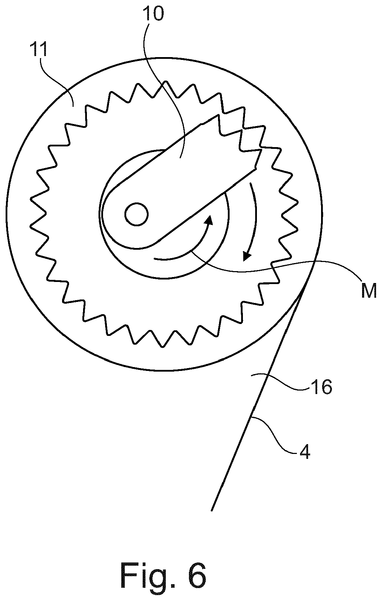

Figure 6 shows a situation in which the bed sheet 4 is rolled in the wrong direction around the tube, such that the bed sheet runs underneath the tube and objects or limbs could be caught by the nip 16. If the motor would drive the input shaft 13 with a torque in the shown direction M, the pawl 10 would be forced out of engagement with the internal gear 11 such that no force could be exerted onto the bed sheet 4 .

## Claims

1. Device for turning persons lying on a bed sheet comprising:
- a frame, such as a bed frame, having a substantially horizontal elongate support surface for supporting a lying person;
- a first and a second tube respectively arranged adjacent and on either longitudinal side of the support surface, wherein the first and second tube are substantially parallel to each other;
- a bed sheet mounted with one edge to the first tube and mounted with an opposite edge to the second tube, wherein the bed sheet runs over the support surface;
- a first and second motor for driving the first and second tube respectively;
wherein
- a first and second freewheel clutch arranged respectively between the first tube and first motor and between the second tube and the second motor.

2. Device according to claim 1, wherein the engagement direction of the first freewheel clutch and the engagement direction of the second freewheel clutch are opposite in view of the longitudinal direction of the elongate support surface.

3. Device according to claim 2, wherein in view of the longitudinal direction of the elongate support surface, the first tube is arranged on the left side of the support surface and wherein the first freewheel clutch has a counterclockwise engagement direction, while the second tube is arranged on the right side of the support surface and wherein the second freewheel clutch has a clockwise engagement direction.

4. Device according to any of the preceding claims, wherein the first and second freewheel clutch each comprise:
- an input shaft and an output shaft;
- an internal gear concentrically arranged to the output shaft;
- at least one pawl having a rotation axis, which at least one pawl is arranged with the rotation axis eccentrically on the input shaft and wherein the free end of the at least one pawl is urged in engaging contact with the internal gear by spring means.

## Patentansprüche

1. Vorrichtung zum Wenden von auf einem Bettlaken liegenden Personen, umfassend:
- ein Gestell, wie beispielsweise ein Bettgestell, das eine im Wesentlichen horizontale, langgestreckte Stützoberfläche zum Stützen einer liegenden Person aufweist;
- ein erstes und ein zweites Rohr, die jeweils angrenzend und an beiden Längsseiten der Stützoberfläche angeordnet sind, wobei das erste und zweite Rohr im Wesentlichen parallel zueinander sind;
- ein Bettlaken, das mit einer Kante an dem ersten Rohr montiert ist, und mit der entgegengesetzten Kante an dem zweiten Rohr montiert ist, wobei das Bettlaken über die Stützoberfläche verläuft;
- einen ersten und zweiten Motor zum Antreiben von jeweils dem ersten und zweiten Rohr;
wobei
- eine erste und zweite Freilaufkupplung jeweils zwischen dem ersten Rohr und ersten Motor und zwischen dem zweiten Rohr und dem zweiten Motor angeordnet sind.

2. Vorrichtung nach Anspruch 1, wobei die Eingriffsrichtung der ersten Freilaufkupplung und die Eingriffsrichtung der zweiten Freilaufkupplung in der Längsrichtung der langgestreckten Stützoberfläche betrachtet entgegengesetzt sind.

3. Vorrichtung nach Anspruch 2, wobei das erste Rohr, in der Längsrichtung der langgestreckten Stützoberfläche betrachtet, auf der linken Seite der Stützoberfläche angeordnet ist, und wobei die erste Freilaufkupplung eine Eingriffsrichtung gegen den Uhrzeigersinn aufweist, während das zweite Rohr auf der rechten Seite der Stützoberfläche angeordnet ist, und wobei die zweite Freilaufkupplung eine Eingriffsrichtung im Uhrzeigersinn aufweist.

4. Vorrichtung nach einem der vorstehenden Ansprüche, wobei die erste und zweite Freilaufkupplung jeweils umfassen:
- eine Eingangswelle und eine Abtriebswelle;
- ein konzentrisch zu der Abtriebswelle angeordnetes Innenzahnrad;
- mindestens eine Sperrklinke, die eine Drehachse aufweist, wobei die mindestens eine Sperrklinke mit der Drehachse exzentrisch auf der Eingangswelle angeordnet ist, und wobei das freie Ende der mindestens einen Sperrklinke durch Federmittel in Eingriffskontakt mit dem Innenzahnrad gedrängt wird.

## Revendications

1. Dispositif de retournement de personnes couchées sur un drap de lit comprenant :
- un cadre, tel qu'un cadre de lit, présentant une surface de support allongée sensiblement horizontale pour supporter une personne couchée ;
- des premier et second tubes agencés respectivement de manière adjacente et sur l'un ou l'autre côté longitudinal de la surface de support, dans lequel les premier et second tubes sont sensiblement parallèles l'un à l'autre ;
- un drap de lit mis en place avec un bord sur le premier tube et mis en place avec un bord opposé sur le second tube, dans lequel le drap de lit s'étend sur la surface de support ;
- un premier et un second moteur pour entraîner respectivement les premier et second tubes ;
dans lequel
- un premier et un second embrayage à roue libre agencés respectivement entre le premier tube et le premier moteur et entre le second tube et le second moteur.

2. Dispositif selon la revendication 1, dans lequel le sens d'engrènement du premier embrayage à roue libre et le sens d'engrènement du second embrayage à roue libre sont opposés compte tenu de la direction longitudinale de la surface de support allongée.

3. Dispositif selon la revendication 2, dans lequel, compte tenu de la direction longitudinale de la surface de support allongée, le premier tube est agencé sur le côté gauche de la surface de support et dans lequel le premier embrayage à roue libre présente un sens d'engrènement dans le sens contraire des aiguilles d'une montre, tandis que le second tube est agencé sur le côté droit de la surface de support et dans lequel le second embrayage à roue libre présente un sens d'engrènement dans le sens des aiguilles d'une montre.

4. Dispositif selon l'une quelconque des revendications précédentes, dans lequel les premier et second embrayages à roue libre comprennent chacun :
- un arbre d'entrée et un arbre de sortie ;
- un engrenage interne agencé de manière concentrique à l'arbre de sortie ;
- au moins un cliquet présentant un axe de rotation, lequel au moins un cliquet est agencé avec l'axe de rotation de manière excentrique sur l'arbre d'entrée et dans lequel l'extrémité libre du au moins un cliquet est poussée en contact d'engrènement avec l'engrenage interne par des moyens formant ressort.
